# EUROPEAN PATENT SPECIFICATION

(11) **EP 4 015 688 B1**
(45) Date of publication and mention of the grant of the patent: **21.08.2024**
(21) Application number: 20853096.4
(22) Date of filing: 13.07.2020
(51) Int. Cl.: D03D 49/20, D06B 23/02, D06B 15/02, B65H 75/24, F16C 13/00, B65H 27/00

(54) **TUBE FOR MAKING ROLLER, ROLLER BODY AND USE OF ROLLER BODY**
ROHR ZUR HERSTELLUNG EINER WALZE, WALZENKÖRPER UND VERWENDUNG DES WALZENKÖRPERS
TUBE POUR FABRICATION DE ROULEAU, CORPS DE ROULEAU ET UTILISATION DU CORPS DE ROULEAU

(30) Priority: 14.08.2019 CN 201910747638
(43) Date of publication of application: 22.06.2022
(73) Proprietor: Shandong Guangtai Environmental Technology Company Limited, Yantai, Shandong 265600 (CN)
(72) Inventor: GAO, Yucheng, Yantai, Shandong 265600 (CN)
(74) Representative: Wang, Bo
(86) International application number: PCT/CN2020/101634
(87) International publication number: WO 2021/027461

(56) References cited:
- EP-A1- 1 447 361
- CN-A- 110 422 677
- CN-A- 110 606 400
- CN-S- 305 596 712
- CN-U- 205 775 317
- CN-U- 205 839 435
- CN-U- 206 873 104
- CN-U- 211 225 729
- FR-A- 1 539 707
- GB-A- 1 096 994
- JP-A- 2007 047 321

## Description

### TECHNICAL FIELD

The present invention relates to the technical field of roller body preparation, in particular to a tube for making a roller, a roller body, and the applications of the roller body.

### BACKGROUND

In the washing, textile, printing and dyeing industries, a cloth guide roller is a commonly used component, which generally comprises a cylinder and two shaft heads; the two shaft heads are fixedly connected to the two ends of the cylinder; the cloth guide roller is mainly used for supporting and smoothly conveying textiles;

The existing ultra-long guide rollers are generally realized by thickening the wall thickness of the cylinder; in order to achieve a preset strength, the thickness of the steel tube for preparing the roller body cannot be less than 15 mm; although this thickened guide roller improves the strength of the guide roller, it leads to the excessive wall thickness of the guide roller, an increase of its own weight, and an increase of the manufacturing cost; in addition, compared with the roller bodies used in other industries, with the technological development of machinery equipment, the required length of the roller bodies in the washing, textile, printing and dyeing industries gradually increases, generally above 5 m, and the rotating speed is also increasing; therefore, the requirements with respect to the jump of the roller bodies are very high; a significant jump of the roller bodies will cause the cloth to wrinkle and increase the load of the power system; once the cloth wrinkles which causes quality problems or power system failures, it will bring severe losses to the company, and normal companies are afraid to try new products;

Since a plurality of roller bodies are generally used in the equipment, if the jump of one of the roller bodies is significant, the jump will be multiplied after being transmitted through the other roller bodies, therefore the roundness tolerance of the roller bodies in practical use must be controlled to be below 0.3 mm to meet the jump requirements; roundness refers to the degree to which the cross-section of a workpiece is close to a theoretical circle; roundness is the difference between the maximum radius and the minimum radius; the roundness tolerance is the area between two concentric circles with the tolerance value t as the radius difference; if there is a cylinder with a roundness tolerance of 0.03, it means that a circle on any cross-section of the cylinder must lie between two concentric circles with a distance of 0.03.

In order to increase the support strength of the roller body while reducing the wall thickness of the tube body, it is now mostly solved by adding a support portion in the cylinder; using the existing support portion to support the tube body can increase the strength of the roller body to a certain extent, however, the problem of roller body jumping still cannot be solved; the reason is that the cylinder will be subjected to a greater pulling force from the fabric during use; on the one hand, once the existing support portion is larger than the cylinder, it cannot enter the cylinder; a forcible entering will cause the cylinder to deform and increase the roundness tolerance of the cylinder; when in use, the roller body will have a relatively large jump; on the other hand, even if the fit between the support portion and the tube body (without an interference fit) is very close, there will still be a gap between the two; under a pulling force, a slight bend will occur, and the diameter of the tube body at the bent part will increase, causing the support portion to lose its supporting function; further, only the two ends of the roller body are fixed when the roller body is fixed, and the slight bend will cause relatively larger jumps, which cannot meet the practical application of mechanical equipment.

CN 205 775 317 U discloses an ultra-long guide roller including a roller body. The roller body is provided with a roller body shaft which is connected to the inner wall of the roller body by means of a plurality of flange plates in interference. CN 205 839 435 U discloses a guide roller for separating belts, said guide roller being used in an ironing machine.

### SUMMARY OF THE INVENTION

In order to solve the above technical problems, the purpose of the present invention is to provide a tube for making a roller, a roller body, and applications of the roller body.

The invention is set out in the appended set of clams.

According to one aspect of the present disclosure, there is provided a tube body support member, which comprises a body;
an outer edge of the body is connected to a connecting portion, and the other end of the connecting portion is connected to a support portion;
the angle between the support portion and the horizontal plane is an acute angle, and the diameter of the circle formed by the outer edge of the support portion is greater than the diameter of the circle formed by the outer edge of the connecting portion.

Compared with the prior art, the present disclosure has the following beneficial effects: when the tube body support member is subjected to radial external forces (e.g., radially inward pressure, outward pulling force, etc.), the deformation of the connecting portion drives the angle between the support portion and the horizontal surface to increase or decrease; when the tube body support member enters the tube body, it will be subjected to the radial pressure of the wall of the tube body, which will drive the inclination angle of the support portion to decrease; since the recovery stress of the connecting portion will not be eliminated at this time, the support portion forms an elastic support under the recovery stress of the connecting portion; one aspect is that the diameter of the tube body support member can be greater than the diameter of the inner cavity of the tube body during design; after the tube body support member enters the tube body, an interference fit is formed and there is no gap between the tube body and the support portion, which increases the support force of the tube body support member to the tube wall and prevents the deformation of the tube body effectively; while providing elastic support, the inclination angle of the support portion is reduced, which can prevent the tube body from being deformed by the tube body support member; if the tube is subjected to elastic deformation (e.g., bending deformation, etc.) due to the use environment, the support portion can adaptively deform along with the increase and decrease of the tube diameter of the tube, so as to support the tube, preventing plastic deformation of the tube caused by repeated elastic deformation, and facilitating maintaining of the original roundness tolerance of the tube after being manufactured in factory.

Further, the connecting portion is:
a first connecting portion; the first connecting portion is an arc-shaped connecting portion; one end of the arc-shaped connecting portion is connected to the body, and the other end is connected to the support portion;
   or
a second connecting portion; the second connecting portion is inclined to a side away from the body, and the inclination angle of the second connecting portion is smaller than the inclination angle of the support portion.

The above-mentioned further solution has the following beneficial effect: there are angles between the connecting portion and the body and between the connecting portion and the support portion; the body is generally vertically located in the tube body and will not be deformed due to radial external force; when the support portion is subjected to a radial external force, it will be transmitted to the connecting portion; when the external force reaches the limit of deformation of the connecting portion, the connecting portion can be deformed.

Further, the radius of the first connecting portion is 2-15 mm.

The beneficial effect of adopting the above-mentioned further solution is that when the diameter of the tube body support member is slightly greater than the inner diameter of the tube body, the tube body support member can be deformed so that the support portion closely contacts the tube wall and enters the tube body; if the radius of the first connecting portion is less than 2 mm, the required deformation force is greater, and it is likely that the external force in the radial direction does not cause the deformation of the connecting portion, but deforms the tube body; if the radius of the first connecting portion is greater than 15 mm, the required deformation force is too small; as a result, the support force of the tube body support member becomes small, and the purpose of supporting the tube body to prevent the deformation of the tube body can not be achieved.

Further, the distance between the support portion and the body is not less than 5 mm; and/or the angle between the support portion and the vertical plane is 90°-150°.

The beneficial effect of adopting the above-mentioned further solution is that it can help the support portion to support the tube body effectively.

Further, the thickness of the connecting portion is 3 mm-20 mm.

The above-mentioned further solution has the following beneficial effects: the body is effectively prevented from being deformed due to the radial external force, and it can help the support portion to support the tube body effectively.

According to one aspect of the present invention, there is provided a tube for making a roller as defined in claims 1-9.

Compared with the prior art, the present invention has the following beneficial effects: a plurality of tube body support members are arranged in the tube body at intervals along the length direction of the tube body, which significantly improves the structural strength and rigidity of the tube body; in addition, the tube body support members can provide elastic support, so that the tube body support members can not only be installed into the tube body in the form of interference fit, but also can support the tube and be adapted to the change of the diameter of the inner wall of the tube, preventing the support portion from non-elastically deforming the tube excessively, and maintaining the roundness tolerance and axial straightness of the tube.

Further, when using the cross-section at the middle of the tube body as the middle interface, the distance between the two tube body support members adjacent to the middle interface is not greater than the distance between any two tube body support members.

The above-mentioned further solution has the following beneficial effect: when in use, the position where the tube body is most likely to undergo elastic deformation is the middle part of the tube body; the distance between the two tube body support members adjacent to the middle interface is not greater than the distance between any two tube body support members, which increases the support force of the middle part of the tube body, and prevents the deformation of the middle part of the tube body effectively.

Further, for the tube body support members located on the same side of the intermediate interface, starting from the intermediate interface to an end of the tube body, the distance between the adjacent tube body support members gradually increases to a predetermined length, and then the adjacent tube body support members are distributed at equal intervals.

The beneficial effect of adopting the above-mentioned further solution is that the support force of the middle part of the tube body can be increased, and the deformation of the tube body during use can be further effectively prevented.

Further, the tube for making a roller comprises a first support shaft; the body is provided with a shaft hole matching the first support shaft; the first support shaft passes through the shaft holes of at least two bodies.

The beneficial effect of adopting the above-mentioned further solution is that the first support shaft connects the tube body support members in series through the shaft holes, which can increase the support strength of the tube body, and prevent the tube body from being deformed and bent when the tube is subjected to an axial pulling force.

Further, the tube for making a roller comprises a second support shaft; the first support shaft is of a hollow structure, and a plurality of the tube body support members are arranged in the first support shaft; the tube body support members arranged in the first support shaft are provided with shaft holes matching with the second support shaft, and the second support shaft passes through the shaft holes of at least two tube body support members.

The beneficial effect of adopting the above-mentioned further solution is that the support strength of the tube body can be further increased, and the tube body can be prevented from being deformed and bent.

Further, a spacer sleeve is provided outside the tube body; the spacer sleeve comprises a plurality of sleeves; a ring-shaped spacer is arranged between adjacent sleeves; the inner diameters of the sleeves and the ring-shaped spacer are slightly greater than the outer diameter of the tube body.

The beneficial effect of adopting the above-mentioned further solution is that it is applied to prepare the guide roller for separating the conveying belts in an ironing machine of washing equipment, and the function of the spacer sleeve is to prevent each belt from moving laterally.

Further, the tube body comprises a base tube; the base tube is covered with a stainless steel tube, and the wall thickness of the tube body is not less than 4 mm.

The above-mentioned further solution has the following beneficial effects: it is mainly applied to prepare cloth guide rollers in washing, weaving, printing and dyeing equipment, and the preparation process is more environmentally friendly; it not only improves the mechanical properties and surface quality of the cloth guide roller, but also reduces the manufacturing cost.

According to one aspect of the present invention, there is provided a roller body comprising a tube for making a roller as defined in claims 10-15.

Further, both ends of the first support shaft or the second support shaft extend out of the tube for making a roller;
or
both ends of the tube for making a roller are provided with shaft heads; one end of the shaft head extends out of the tube for making a roller, and at least three shaft flanges are provided on the shaft head; the outer edge of the shaft flanges is connected to the inner wall of the tube body or the inner wall of the support shaft.

Compared with the prior art, the present invention has the following beneficial effects: the two ends of the first support shaft or the second support shaft extend out of the tube for making a roller, and the first support shaft or the second support shaft are used as the shaft heads of the roller body; or both ends of the tube for making a roller are provided with shaft heads; at least three shaft flanges are arranged on the shaft head; in this way, the shaft head will be connected with at least three shaft flanges at the same time; if any two of the three shaft flanges are concentric with the tube body, it can increase the concentricity between the shaft head and the tube body, reduce the jumping caused by the concentricity error of the shaft head and the tube body when the roller body rotates, and increase the service life of the shaft head and the stability of the roller body rotation.

Further, the shaft flanges are straight flanges, bowl flanges, or the tube body support members.

The purpose of adopting the above-mentioned further solution is to increase the contact area between the outer edge of the flange plate and the roller body, and increase the support strength of the shaft heads to the tube body.

Further, the stainless steel tube is radially provided with a plurality of separating plates, and the separating plates are fixedly connected with the stainless steel tube or integrally formed with the stainless steel tube.

The beneficial effect of adopting the above-mentioned further solution is that it is mainly applied to prepare guide rollers for separating the conveying belts, by which each belt does not move laterally.

Further, the surface of the tube body is provided with a winding wire having a left-handed and/or right-handed rotation direction, and the cross-section of the winding wire has a T shape with a top surface having an arc shape.

The beneficial effect of adopting the above-mentioned further solution is that it is used to prepare a expanding roller that has a function of expanding the fabric; on one hand, it can increase the contact surface of the fabric so that the fabric has more stressed surfaces during expanding, thereby improving the expanding effect; on the other hand, the contact surface between the bottom of the wire and the outer wall of the roller is large so that the connection between the wire and the stainless steel outer tube is enhanced.

Further, an outer sleeve is sleeved on the outer side of the tube for making a roller, and the outer sleeve is axially provided with a plurality of protrusions, and the top of the protrusions is arc-shaped.

The beneficial effect of adopting the above-mentioned further solution is that it is mainly applied to the cloth guide roller of water washing equipment; the design of the protrusions can not only reduce the contact area between the fabric and the roller body, reduce the wear of the roller body to the fabric, but also improve the washing effect of the fabric, as the water-washing medium can flow and penetrate between the protrusions of the roller body to penetrate and wash the fabric.

According to another aspect of the present invention, there is provided any one of an ironing machine, a spreading machine, a cloth feeder, a folding machine, and a stacking machine using any one of the above-mentioned roller body.

### DESCRIPTION OF THE DRAWINGS

Figure 1 is a schematic diagram of the structure of a tube body support member;
Figure 2 is a cross-sectional view of a tube body support member;
Figure 3 is a cross-sectional view of another tube body support member;
Figure 4 is a schematic diagram of the structure of a tube for making a roller - not part of the invention;
Figure 5 is a magnified view of A in Figure 4;
Figure 6 is structural diagram 1 of a roller body - not part of the invention;
Figure 7 is structural diagram 2 of a roller body - not part of the invention;
Figure 8 is structural diagram 3 of a roller body;
Figure 9 is structural diagram 4 of a roller body;
Figure 10 is structural diagram 5 of a roller body;
Figure 11 is structural diagram 6 of a roller body;
Figure 12 is a magnified view of B of Figure 11;
Figure 13 is a cross-sectional view of winding wire(s);
Figure 14 is structural diagram 7 of a roller body;
Figure 15 is structural diagram 8 of a roller body;
Figure 16 is a schematic diagram of the structure of a corrugated separating plate;
Figure 17 is a schematic diagram of the structure of an outer sleeve;
Figure 18 is a schematic view of the cross-section of an outer sleeve;

Reference numbers shown in the drawings:
1-tube body; 11-base tube; 12-stainless steel tube; 13-shaft head; 14-shaft flange; 15-shaft hole;
2-tube body support member; 21-body; 22-connecting portion; 23-support portion;
3- the first support shaft; 4- the second support shaft;
51-sleeve; 52-ring-shaped spacer; 53-fastening sleeve; 54- separating plate; 55-corrugated separating plate;
6- winding wire; 7. outer sleeve; 71. protrusion.

### Detailed Description

In order to better understand the technical solutions of the present invention, the present invention will be further described below in conjunction with specific embodiments and the accompanying drawings of the specification.

### Embodiment 1:

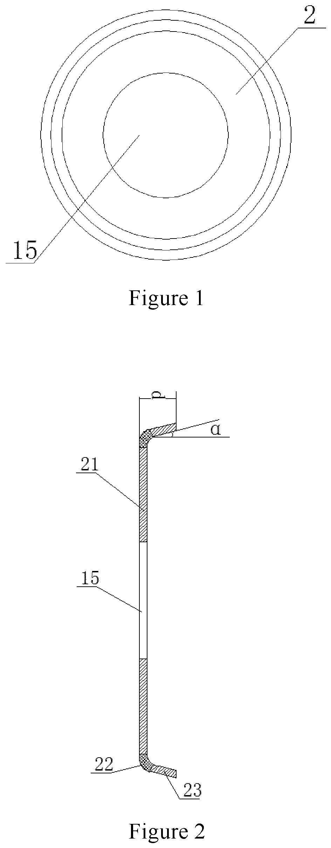

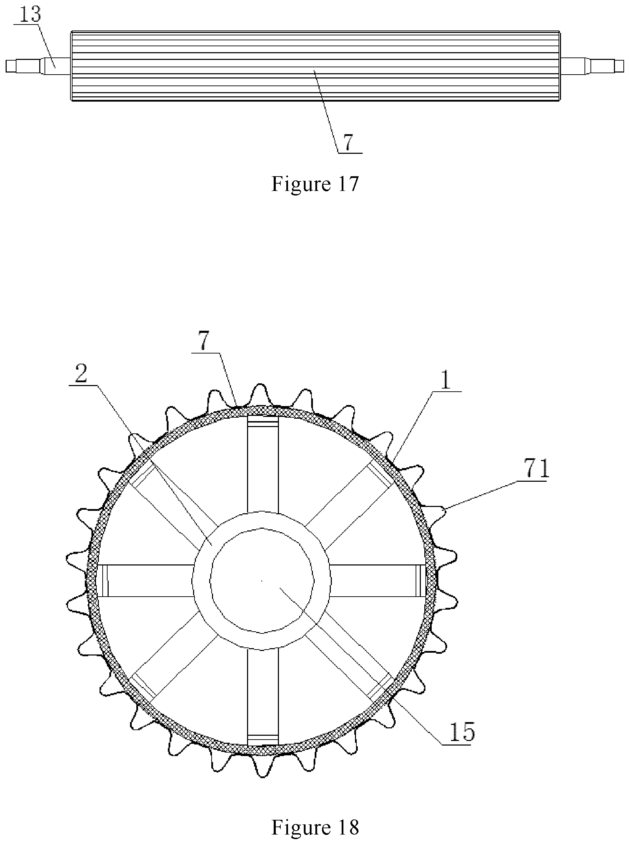

As shown in Figures 1-3, a tube body support member 2 comprises a body 21; as an option, the body 21 can be of a disc type (shown in FIG. 1), a shape of Chinese character " *" (shown in FIG. 18), a chainring type, and a cross type; meanwhile, to facilitate the addition of a support shaft, a shaft hole 15 is provided in the middle of the body 21; the outer edge of the support ring is connected with a support portion 23 through a connecting portion 22; the outer edge of the support portion 23 is circular and it is adapted to the inner wall of the tube body 1.

The outer edge of the body 21 is provided with the connecting portion 22, and one end of the connecting portion 22 away from the body 21 is provided with the support portion 23; the support portion 23 is inclined to a side away from the body 21; the angle α between the support portion 23 and the vertical plane is 90°-150°, and the distance d between the support portion 23 and the body 21 is greater than or equal to 5 mm; in this embodiment, the distance between the support portion 23 and the body 21 is 5 mm, and the angle between the support portion 23 and the vertical plane is 95°; as specific alternatives, the distance between the support portion 23 and the body 21 is 6 mm, 8 mm, 10 mm, etc., and the angle between the support portion 23 and the vertical plane can also be 100°, 105°, 120°, etc.; when the support portion 23 is subjected to a radial external force, the deformation of the connecting portion 22 drives the inclination angle of the support portion 23 to increase or decrease; the thickness of the connecting portion 22 is 3 mm-20 mm; specifically, the connecting portion 22 is a first connecting portion 22; the first connecting portion 22 is an arc-shaped connecting portion 22; one end of the arc-shaped connecting portion 22 is connected to the body 21, and the other end is connected to the support portion 23; or a second connecting portion 22, the second connecting portion 22 being inclined to a side away from the body 21, and the inclination angle of the second connecting portion 22 is smaller than the inclination angle of the support portion 23. One of the first connecting portion 22 and the second connecting portion 22 can be chosen to be used, preferably an arc-shaped first connecting portion 22 with a radius of 5 mm; as specific options, the radius of the first connecting portion 22 can also be 2 mm, 8 mm, 15 mm etc.; when the tube body support member 2 is subjected to radial external forces (e.g., radially inward pressure, outward pulling force, etc.), the deformation of the connecting portion 22 drives the inclination angle of the support portion 23 to increase or decrease; this embodiment is mainly applied to the internal support of the tube body 1; the tube body support member 2 will be subjected to the radial pressure of the tube wall when it enters the tube body 1, thereby driving the inclination angle of the support portion 23 to decrease; at this time, the restoring stress will not be eliminated, and an elastic support will be formed under the restoring stress of the connecting portion 22; one aspect is that the diameter of the tube body support member 2 can be greater than the diameter of the inner cavity of the tube body 1 during design; after the tube body support member 2 enters the tube body 1, an interference fit is formed and there is no gap between the tube body 1 and the support portion 23, which increases the support force of the tube body support member 2 to the tube wall, and effectively prevents the deformation of the tube body 1, and while providing elastic support, the inclination angle of the support portion 23 being reduced, which can prevent the tube body 1 from being deformed by the tube body support member 2; if in use, the tube is subjected to elastic deformation (e.g., bending deformation, etc.) due to the use environment, the support portion 23 can adaptively deform along with the increase and decrease of the tube diameter of the tube, so as to support the tube, preventing plastic deformation of the tube caused by repeated elastic deformation and maintaining the original roundness tolerance of the tube after being manufactured in factory.

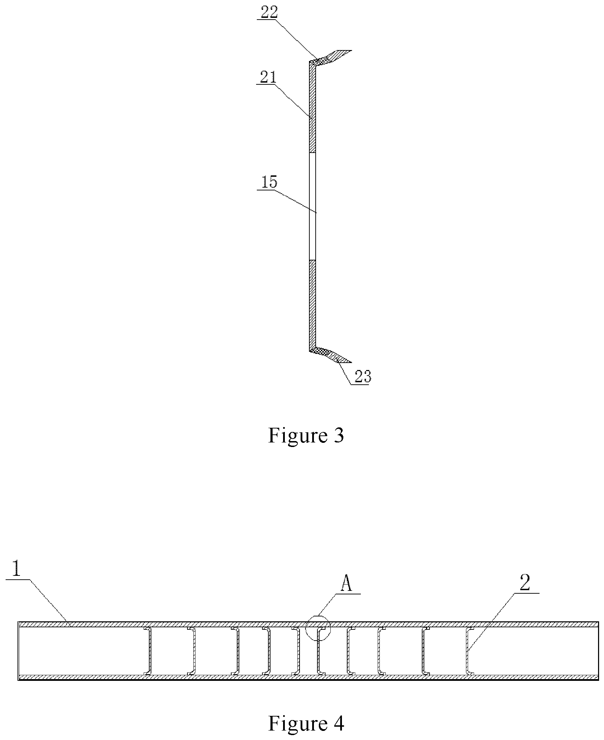

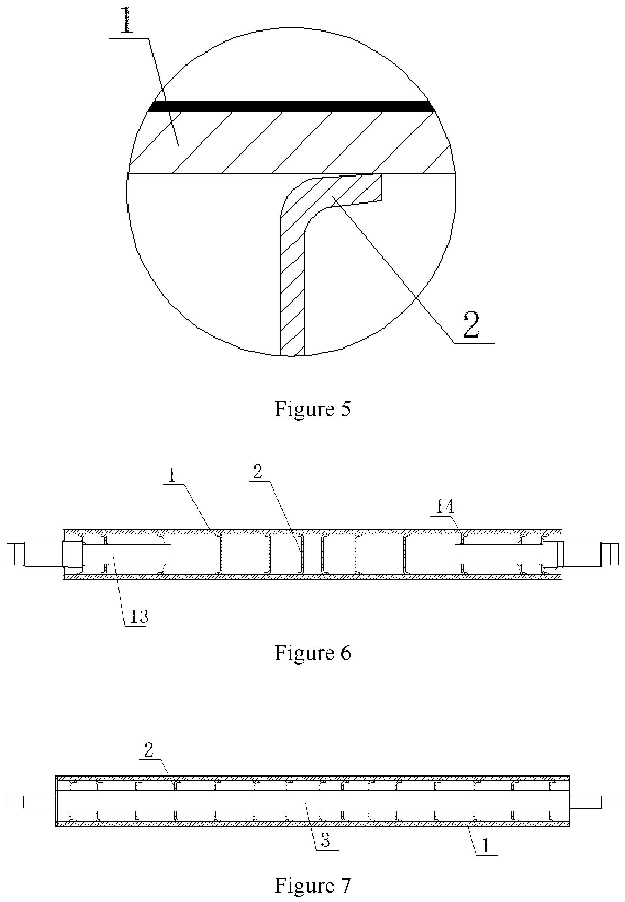

As shown in Figures 4 and 5, this embodiment provides a tube for making a roller, said tube being prepared from the tube body support member 2 described in any one of the above; the tube comprises a cylindrical tube body 1, wherein a plurality of tube body support members 2 according to any one of the above are arranged at intervals along the length direction of the tube body 1; during preparation, the tube body support members 2 are put into the tube body 1 from the two ends of the tube body 1 respectively; using the cross-section at the middle of the tube body 1 as a middle interface, the distance between the two tube body support members 2 adjacent to the middle interface is not greater than the distance between any two tube body support members 2; when in use, the position where the tube body 1 is most likely to undergo elastic deformation is the middle part of the tube body 1; the distance between the two tube body support members 2 adjacent to the middle interface not being greater than the distance between any two tube body support members 2, can increase the support force for the middle part of the tube body, and prevents the deformation of the middle part of the tube body effectively; at the same time as a preferred option, for the tube body support members 2 located on the same side of the intermediate interface, starting from the intermediate interface to an end of the tube body 1, the distance between two adjacent tube body support members 2 gradually increases towards a predetermined length, and then the adjacent tube body support members 2 are distributed at equal intervals; in actual production, a tube for making a roller longer than 5 m can be manufactured; the length of the prepared tube body 1 is generally 3-15 m, and the tube body 1 can be controlled to maintain its roundness error within 0.4 mm during use.

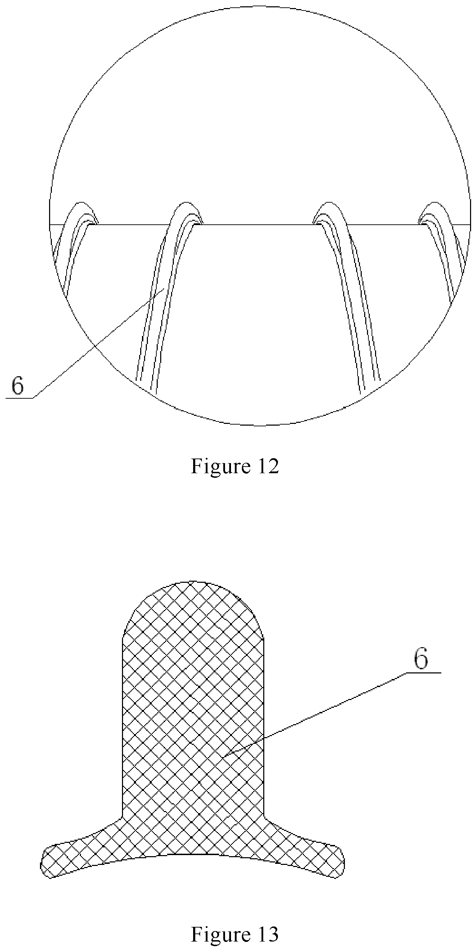

This embodiment provides a roller body prepared from any one of the above-mentioned tubes for making a roller, as shown in Figures 6-15, comprising any one of the above-mentioned tubes for making a roller.

As an option, as shown in Figure 4, using the cross-section at the middle of the tube body 1 as a middle interface, the support portions 23 on both sides of the middle interface are inclined towards the side away from the middle interface; following the inclination direction of the support portion 23, the frictional force can be reduced, which can facilitate putting the tube body support members 2 into the tube body 1; the elastic support force can facilitate the tube body support members 2 to enter the tube body 1 in a vertical state; further, the tube body support members 2 cannot move in the reverse direction because the support portion 23 is inclined, which can facilitate the tube body support members 2 to support the tube body 1 stably.

As an optional solution, as shown in Figures 6-10, the tube for making a roller of this embodiment may further comprise a first support shaft 3; the body 21 is provided with a shaft hole 15 that matches the first support shaft 3; the first support shaft 3 passes through shaft holes 15 of at least two bodies 21; the first support shaft 3 is a through shaft, or comprises a left half shaft and a right half shaft, or comprises a left half shaft, a right half shaft and an intermediate shaft; the first support shaft 3 connects the tube body support members 2 in series through the shaft holes 15, which can increase the support strength of the tube body 1 and prevent the tube body 1 from being deformed and bent when the tube is subjected to an axial pulling force; in order to further increase the support strength of the tube body 1 , it further comprises a second support shaft 4; the first support shaft 3 is of a hollow structure and a plurality of tube body support members 2 are arranged in the first support shaft 3; the tube body support members 2 arranged in the first support shaft 3 are provided with shaft holes 15 that match the second support shaft 4, and the second support shaft 4 passes through shaft holes of at least two tube body support members 2; by providing the support shafts concentric with the tube body 1, the strength of the tube body 1 is increased; compared with directly increasing the wall thickness of the tube body 1, the increase in weight and cost is relatively small, and the manufacturing cost of the manufactory can be reduced.

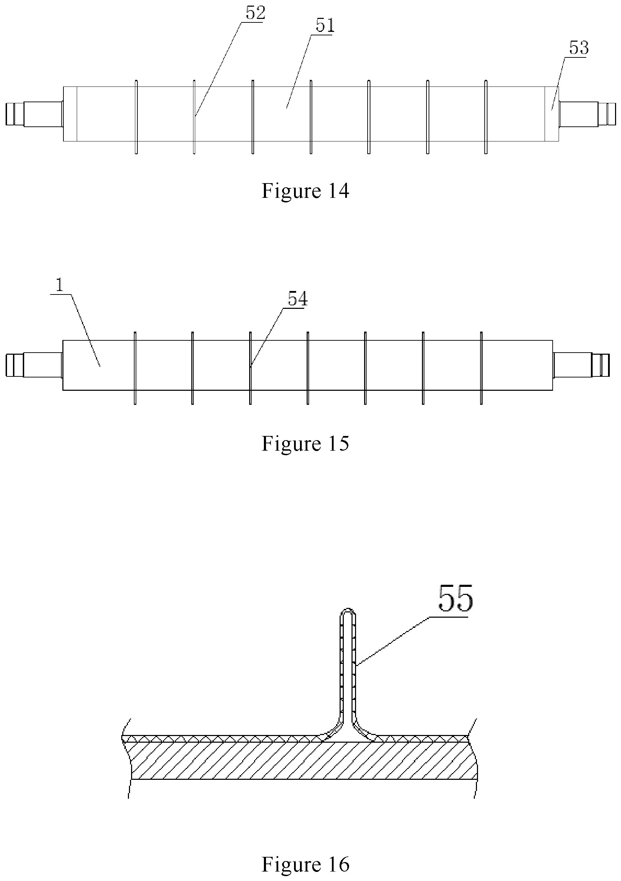

As an option, as shown in Figure 14, a spacer sleeve is provided outside the tube body 1; the spacer sleeve comprises a plurality of sleeves 51; a ring-shaped spacer 52 is arranged between adjacent sleeves 51; the inner diameters of the sleeves 51 and the ring-shaped spacer are slightly greater than the outer diameter of the tube body 1; the distance between the two ring-shaped spacers 52 is controlled by the spacer sleeve; the diameter difference between the ring-shaped spacers 52 and the spacer sleeve is 5-15 mm; it is mainly applied to the preparation of ironing machines for washing equipment; in specific applications, fastening sleeves 53 are used at both ends of the tube body 1 for fixing; the fastening sleeves 53 are threadedly connected to the tube body 1; it is applied to the guide rollers for separating the conveying belts; the function of the spacer sleeve is to prevent each belt from moving laterally.

As an option, as shown in Figures 15 and 16, the tube body 1 comprises a base tube 11, the base tube 11 being covered with a stainless steel tube 12; the wall thickness of the tube body 1 is not less than 4 mm, or 5.5 mm, 6 mm, 6.5 mm can be selected, but generally not more than 10 mm; further, the stainless steel tube 12 is radially provided with a plurality of separating plates 54, and the separating plates 54 are fixedly connected with the stainless steel tube 12 or integrally formed with the stainless steel tube 12, e.g., the separating plates 54 can be corrugated separating plates 55 formed by extruding and bulging the surface of the stainless steel tube 12; the height of the corrugated separating plates 55 is 5-15 mm; the corrugated separating plates 55 and the stainless steel tube 12 are integrally formed without gaps, which can reduce the wear of the conveying belts; it is mainly applied to prepare guide rollers for separating the conveying belts, by which each belt does not move laterally.

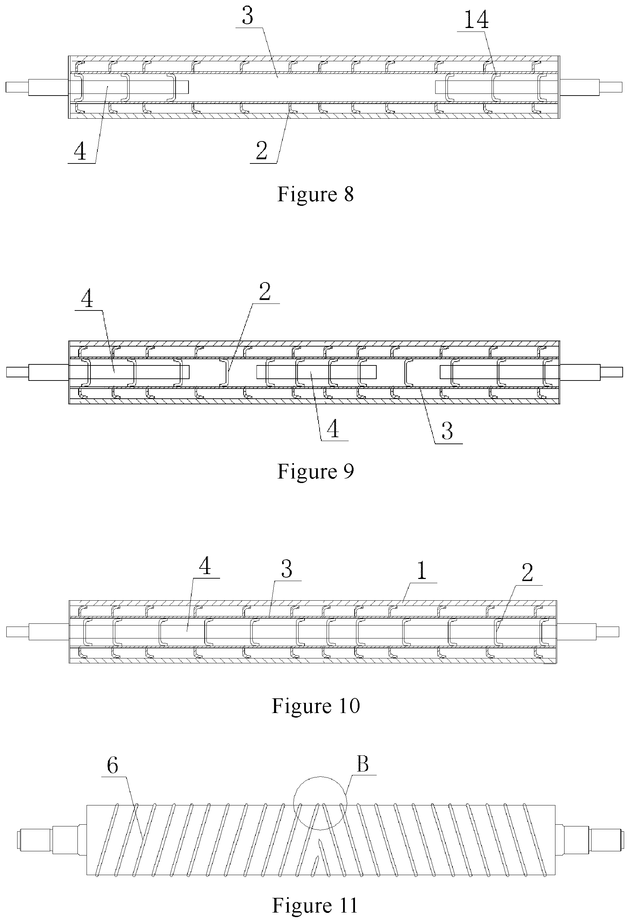

As an option, as shown in Figures 11-13, the surface of the tube body 1 is provided with a winding wire 6 having a left-handed and/or right-handed rotation direction, and the cross-section of the winding wire 6 has a T-shape (inverted T-shape) with a top surface having an arc shape; wherein the radius of the arc on the top surface is 10-125 mm, and the height of the winding wire 6 is 3-12 mm; it is used to prepare a expanding roller that has a function of expanding the fabric; on one hand, it can increase the contact surface of the fabric so that the fabric has more stressed surfaces during expanding, thereby improving the expanding effect; on the other hand, the contact surface between the bottom of the wire and the outer wall of the roller is large, so that the connection between the wire and the stainless steel outer tube is enhanced.

As an option, as shown in Figures 17-18, an outer sleeve 7 is sleeved on the outer side of the tube for making a roller, and the outer sleeve 7 is axially provided with a plurality of protrusions 71, and the top of the protrusions is arc-shaped; this kind of roller body is mainly applied to the cloth guide roller of water washing equipment; the design of the protrusions 71 can not only reduce the contact area between the fabric and the roller body, reduce the wear of the roller body to the fabric, but also improve the washing effect of the fabric, as the water-washing medium can flow and penetrate between the protrusions 71 of the roller body to penetrate and wash the fabric.

For increasing the bending resistance of the roller body, it needs to add support shafts in the tube for making a roller; when the roller body is applied to downstream equipment, it needs to install shaft heads 13 at both ends; in this embodiment, both ends of the first support shaft 3 or the second support shaft 4 extend out of the tube for making a roller; if only a first support shaft 3 is arranged in the tube body 1, the parts of the first support shaft 3 that extend out of the tube for making a roller are used as shaft heads 13; if a second support shaft 4 is arranged inside the first support shaft 3, the parts of the second support shaft 4 that extend out of the tube for making a roller are used as shaft heads 13; or if there is no support shaft extending out of the left and right ends of the tube body 1, both ends of the tube for making a roller are provided with shaft heads 13; one end of the shaft head 13 extends out of the tube for making a roller, and at least three shaft flanges 14 are provided on the shaft head 13; the shaft flanges 14 are straight flanges, bowl flanges, or the tube body support members 2 according to any one of claims 1-6; the outer edge of the shaft flanges 14 is connected to the inner wall of the tube body 1 or the inner wall of the support shaft; and then it is applied to the roller body to prepare any one of an ironing machine, a spreading machine, a cloth feeder, a folding machine, and a stacking machine.

The above description is only preferred embodiments of the present application and an explanation of the applied technical principles. The invention is defined by the appended claims.

## Claims

1. A tube for making a roller, comprising:
a cylindrical tube body (1), wherein in the tube body (1), a plurality of tube body support members (2) are arranged at intervals along the length direction of the tube body (1);
wherein the tube body support member (2) comprises a body (21);
wherein an outer edge of the body (21) is connected to a connecting portion (22), and the other end of the connecting portion (22) is connected to a support portion (23);
wherein the angle between the support portion (23) and a horizontal plane is an acute angle, and the diameter of the circle formed by the outer edge of the support portion (23) is greater than the diameter of the circle formed by the outer edge of the connecting portion (22);
a first support shaft (3); wherein the body (21) is provided with a shaft hole (15) matching the first support shaft (3); wherein the first support shaft (3) passes through the shaft holes (15) of at least two bodies (21);
**characterized by** further comprising,
a second support shaft (4); wherein the first support shaft (3) is of a hollow structure, and a plurality of the tube body support members (2) are arranged in the first support shaft (3); wherein the tube body support members (2) arranged in the first support shaft (3) are provided with shaft holes (15) matching the second support shaft (4), and the second support shaft (4) passes through the shaft holes (15) of at least two tube body support members (2).

2. The tube for making a roller according to claim 1, **characterized in that**, when using the cross-section at the middle of the tube body (1) as a middle interface, the distance between the two tube body support members (2) adjacent to the middle interface is not greater than the distance between any two tube body support members (2).

3. The tube for making a roller according to claim 2, **characterized in that**, for the tube body support members (2) located on the same side of the intermediate interface, starting from the intermediate interface to an end of the tube body (1), the distance between the adjacent tube body support members (2) gradually increases to a predetermined length, and then the adjacent tube body support members (2) are distributed at equal intervals.

4. The tube for making a roller according to claim 1, **characterized in that**, a spacer sleeve is provided outside the tube body (1); wherein the spacer sleeve comprises a plurality of sleeves (51); wherein a ring-shaped spacer (52) is arranged between adjacent sleeves (51); wherein the inner diameters of the sleeves (51) and the ring-shaped spacer (52) are slightly greater than the outer diameter of the tube body (1).

5. The tube for making a roller according to claim 1, **characterized in that**, the tube body (1) comprises a base tube (11); wherein the base tube (11) is covered with a stainless steel tube (12), and the wall thickness of the tube body (1) is not less than 4 mm.

6. The tube for making a roller according to any one of claims 1-5, **characterized in that**, the connecting portion (22) is
a first connecting portion; wherein the first connecting portion is an arc-shaped connecting portion; wherein one end of the arc-shaped connecting portion is connected to the body (21), and the other end is connected to the support portion (23);
or
a second connecting portion; wherein the second connecting portion is inclined to a side away from the body (21), and wherein the inclination angle of the second connecting portion is smaller than the inclination angle of the support portion (23).

7. The tube for making a roller according to claim 6, **characterized in that**, the radius of the first connecting portion is 2-15 mm.

8. The tube for making a roller according to any one of claims 1-7, **characterized in that**,
the distance between the support portion (23) and the body (21) is not less than 5 mm;
and/or
the angle between the support portion (23) and a vertical plane is 90°-150°.

9. The tube for making a roller according to any one of claims 1-8, **characterized in that**, the thickness of the connecting portion (22) is 3 mm-20 mm.

10. A roller body, **characterized by** comprising a tube for making a roller according to any one of claims 1-9.

11. The roller body according to claim 10, **characterized in that**, both ends of the first support shaft (3) or the second support shaft (4) extend out of the tube for making a roller;
or
both ends of the tube for making a roller are provided with shaft heads (13); wherein one end of the shaft head (13) extends out of the tube for making a roller, and at least three shaft flanges (14) are provided on the shaft head (13); wherein the outer edge of the shaft flanges (14) is connected to the inner wall of the tube body (1) or the inner wall of the support shaft.

12. The roller body according to claim 11, **characterized in that**, the shaft flanges (14) are straight flanges, bowl flanges, or the tube body support members (2).

13. The roller body according to claim 5 and claim 10, **characterized in that**, the stainless steel tube (12) is radially provided with a plurality of separating plates (54), and the separating plates (54) are fixedly connected with the stainless steel tube (12) or integrally formed with the stainless steel tube (12).

14. The roller body according to claim 10, **characterized in that**, the surface of the tube body (1) is provided with a winding wire (6) having a left-handed and/or right-handed rotation direction, and the cross-section of the winding wire (6) has a T-shape with a top surface having an arc shape.

15. The roller body according to claim 10, **characterized in that**, an outer sleeve (7) is sleeved on the outer side of the tube for making a roller, and the outer sleeve (7) is axially provided with a plurality of protrusions (71), and the top of the protrusions (71) is arc-shaped.

16. An ironing machine, a spreading machine, a cloth feeder, a folding machine, or a stacking machine using a roller body according to any one of claims 10-15.

## Patentansprüche

1. Rohr zum Herstellen einer Walze, umfassend:
einen zylindrischen Rohrkörper (1), wobei in dem Rohrkörper (1) eine Vielzahl von Rohrkörperstützelementen (2) in Abständen entlang der Längsrichtung des Rohrkörpers (1) angeordnet sind;
wobei das Rohrkörperstützelement (2) einen Körper (21) umfasst;
wobei eine Außenkante des Körpers (21) mit einem Verbindungsabschnitt (22) verbunden ist und das andere Ende des Verbindungsabschnitts (22) mit einem Stützabschnitt (23) verbunden ist;
wobei der Winkel zwischen dem Stützabschnitt (23) und einer horizontalen Ebene ein spitzer Winkel ist, und der Durchmesser des durch die Außenkante des Stützabschnitts (23) gebildeten Kreises größer ist als der Durchmesser des durch die Außenkante des Verbindungsabschnitts (22) gebildeten Kreises;
eine erste Stützwelle (3); wobei der Körper (21) mit einem zu der ersten Stützwelle (3) passenden Wellenloch (15) versehen ist; wobei die erste Stützwelle (3) durch die Wellenlöcher (15) von zumindest zwei Körpern (21) verläuft;
**dadurch gekennzeichnet, dass** es weiter umfasst:
eine zweite Stützwelle (4); wobei die erste Stützwelle (3) eine Hohlstruktur aufweist, und eine Vielzahl der Rohrkörperstützelemente (2) in der ersten Stützwelle (3) angeordnet sind; wobei die in der ersten Stützwelle (3) angeordneten Rohrkörperstützelemente (2) mit zu der zweiten Stützwelle (4) passenden Wellenlöchern (15) versehen sind und die zweite Stützwelle (4) durch die Wellenlöcher (15) von zumindest zwei Rohrkörperstützelementen (2) verläuft.

2. Rohr zum Herstellen einer Walze nach Anspruch 1, **dadurch gekennzeichnet, dass** bei Verwendung des Querschnitts in der Mitte des Rohrkörpers (1) als mittlere Schnittstelle der Abstand zwischen den beiden zu der mittleren Schnittstelle benachbarten Rohrkörperstützelementen (2) nicht größer ist als der Abstand zwischen zwei beliebigen Rohrkörperstützelementen (2).

3. Rohr zum Herstellen einer Walze nach Anspruch 2, **dadurch gekennzeichnet, dass** bei den Rohrkörperstützelementen (2), welche sich auf derselben Seite der Zwischenschnittstelle befinden, ausgehend von der Zwischenschnittstelle bis zu einem Ende des Rohrkörpers (1) der Abstand zwischen den benachbarten Rohrkörperstützelementen (2) allmählich bis zu einer vorbestimmten Länge zunimmt und die benachbarten Rohrkörperstützelemente (2) dann in gleichen Abständen verteilt sind.

4. Rohr zum Herstellen einer Walze nach Anspruch 1, **dadurch gekennzeichnet, dass** außerhalb des Rohrkörpers (1) eine Abstandshalterhülse bereitgestellt ist; wobei die Abstandshalterhülse eine Vielzahl von Hülsen (51) umfasst; wobei zwischen benachbarten Hülsen (51) ein ringförmiger Abstandshalter (52) angeordnet ist; wobei die Innendurchmesser der Hülsen (51) und des ringförmigen Abstandshalters (52) geringfügig größer sind als der Außendurchmesser des Rohrkörpers (1).

5. Rohr zum Herstellen einer Walze nach Anspruch 1, **dadurch gekennzeichnet, dass** der Rohrkörper (1) ein Basisrohr (11) umfasst; wobei das Basisrohr (11) mit einem Edelstahlrohr (12) ummantelt ist, und die Wandstärke des Rohrkörpers (1) nicht weniger als 4 mm beträgt.

6. Rohr zum Herstellen einer Walze nach einem der Ansprüche 1-5, **dadurch gekennzeichnet, dass** der Verbindungsabschnitt (22) ein erster Verbindungsabschnitt ist; wobei der erste Verbindungsabschnitt ein bogenförmiger Verbindungsabschnitt ist; wobei ein Ende des bogenförmigen Verbindungsabschnitts mit dem Körper (21) verbunden ist und das andere Ende mit dem Stützabschnitt (23) verbunden ist;
oder
ein zweiter Verbindungsabschnitt ist; wobei der zweite Verbindungsabschnitt zu einer von dem Körper (21) wegweisenden Seite geneigt ist, und wobei der Neigungswinkel des zweiten Verbindungsabschnitts kleiner ist als der Neigungswinkel des Stützabschnitts (23).

7. Rohr zum Herstellen einer Walze nach Anspruch 6, **dadurch gekennzeichnet, dass** der Radius des ersten Verbindungsabschnitts 2-15 mm beträgt.

8. Rohr zum Herstellen einer Walze nach einem der Ansprüche 1-7, **dadurch gekennzeichnet, dass**
der Abstand zwischen dem Stützabschnitt (23) und dem Körper (21) nicht weniger als 5 mm beträgt;
und/oder
der Winkel zwischen dem Stützabschnitt (23) und einer vertikalen Ebene 90°-150° beträgt.

9. Rohr zum Herstellen einer Walze nach einem der Ansprüche 1-8, **dadurch gekennzeichnet, dass** die Dicke des Verbindungsabschnitts (22) 3 mm-20 mm beträgt.

10. Walzenkörper, **dadurch gekennzeichnet, dass** er ein Rohr zum Herstellen einer Walze nach einem der Ansprüche 1-9 umfasst.

11. Walzenkörper nach Anspruch 10, **dadurch gekennzeichnet, dass** beide Enden der ersten Stützwelle (3) oder der zweiten Stützwelle (4) aus dem Rohr zum Herstellen einer Walze herausragen;
oder
beide Enden des Rohrs zum Herstellen einer Walze mit Wellenköpfen (13) versehen sind; wobei ein Ende des Wellenkopfes (13) aus dem Rohr zum Herstellen einer Walze herausragt und an dem Wellenkopf (13) zumindest drei Wellenflansche (14) bereitgestellt sind; wobei die Außenkante der Wellenflansche (14) mit der Innenwand des Rohrkörpers (1) oder der Innenwand der Stützwelle verbunden ist.

12. Walzenkörper nach Anspruch 11, **dadurch gekennzeichnet, dass** die Wellenflansche (14) gerade Flansche, Schalenflansche oder die Rohrkörperstützelemente (2) sind.

13. Walzenkörper nach Anspruch 5 und Anspruch 10, **dadurch gekennzeichnet, dass** das Edelstahlrohr (12) radial mit einer Vielzahl von Trennblechen (54) versehen ist, und die Trennbleche (54) fest mit dem Edelstahlrohr (12) verbunden oder einstückig mit dem Edelstahlrohr (12) gebildet sind.

14. Walzenkörper nach Anspruch 10, **dadurch gekennzeichnet, dass** die Oberfläche des Rohrkörpers (1) mit einem Wickeldraht (6) versehen ist, welcher eine linksgängige und/oder rechtsgängige Drehrichtung aufweist, und der Querschnitt des Wickeldrahtes (6) eine T-Form mit einer bogenförmigen Oberseite aufweist.

15. Walzenkörper nach Anspruch 10, **dadurch gekennzeichnet, dass** eine Außenhülse (7) auf die Außenseite des Rohrs zum Herstellen einer Walze geschoben wird, und die Außenhülse (7) axial mit einer Vielzahl von Vorsprüngen (71) versehen ist, und die Spitze der Vorsprünge (71) bogenförmig ist.

16. Bügelmaschine, Legemaschine, Wäschetransporter, Faltmaschine oder Stapelmaschine, welche einen Walzenkörper nach einem der Ansprüche 10-15 verwendet.

## Revendications

1. Tube pour fabriquer un rouleau, comprenant :
un corps de tube cylindrique (1), dans lequel, dans le corps de tube (1), une pluralité d'éléments de support de corps de tube (2) sont agencés à des intervalles dans le sens de la longueur du corps de tube (1) ;
dans lequel l'élément de support de corps de tube (2) comprend un corps (21) ;
dans lequel un bord externe du corps (21) est relié à une partie de liaison (22) et l'autre extrémité de la partie de liaison (22) est reliée à une partie de support (23) ;
dans lequel l'angle entre la partie de support (23) et un plan horizontal est un angle aigu et le diamètre du cercle formé par le bord externe de la partie de support (23) est supérieur au diamètre du cercle formé par le bord externe de la partie de liaison (22) ;
un premier arbre de support (3) ; dans lequel le corps (21) est pourvu d'un trou d'arbre (15) correspondant au premier arbre de support (3) ; dans lequel le premier arbre de support (3) traverse les trous d'arbre (15) d'au moins deux corps (21) ;
**caractérisé en ce qu'**il comprend en outre,
un second arbre de support (4) ; dans lequel le premier arbre de support (3) est constitué d'une structure creuse et une pluralité d'éléments de support de corps de tube (2) sont agencés dans le premier arbre de support (3) ; dans lequel les éléments de support de corps de tube (2) agencés dans le premier arbre de support (3) sont pourvus de trous d'arbre (15) correspondant au second arbre de support (4) et le second arbre de support (4) traverse les trous d'arbre (15) d'au moins deux éléments de support de corps tubulaire (2).

2. Tube pour fabriquer un rouleau selon la revendication 1, **caractérisé en ce que**, lors de l'utilisation de la section transversale au milieu du corps de tube (1) comme interface médiane, la distance entre les deux éléments de support de corps de tube (2) adjacents à l'interface médiane est inférieure ou égale à la distance entre deux éléments quelconques de support de corps de tube (2).

3. Tube pour fabriquer un rouleau selon la revendication 2, **caractérisé en ce que**, pour les éléments de support de corps de tube (2) situés du même côté de l'interface intermédiaire, en partant de l'interface intermédiaire jusqu'à une extrémité du corps de tube (1), la distance entre les éléments de support de corps de tube adjacents (2) augmente progressivement jusqu'à une longueur prédéterminée et, ensuite, les éléments de support de corps de tube adjacents (2) sont répartis à des intervalles égaux.

4. Tube pour fabriquer un rouleau selon la revendication 1, **caractérisé en ce qu'**une douille entretoise est disposée à l'extérieur du corps de tube (1) ; dans lequel la douille entretoise comprend une pluralité de douilles (51) ; dans lequel une entretoise en forme d'anneau (52) est agencée entre des douilles adjacentes (51) ; dans lequel les diamètres internes des douilles (51) et de l'entretoise en forme d'anneau (52) sont légèrement plus importants que le diamètre externe du corps de tube (1).

5. Tube pour fabriquer un rouleau selon la revendication 1, **caractérisé en ce que** le corps de tube (1) comprend un tube de base (11) ; dans lequel le tube de base (11) est recouvert d'un tube en acier inoxydable (12) et l'épaisseur de paroi du corps de tube (1) est supérieure ou égale à 4 mm.

6. Tube pour fabriquer un rouleau selon l'une quelconque des revendications 1-5, **caractérisé en ce que** la partie de liaison (22) est une première partie de liaison ; dans lequel la première partie de liaison est une partie de liaison en forme d'arc ; dans lequel une extrémité de la partie de liaison en forme d'arc est reliée au corps (21) et l'autre extrémité est reliée à la partie de support (23) ;
ou
une seconde partie de liaison ; dans lequel la seconde partie de liaison est inclinée vers un côté opposé au corps (21) et dans lequel l'angle d'inclinaison de la seconde partie de liaison est inférieur à l'angle d'inclinaison de la partie de support (23).

7. Tube pour fabriquer un rouleau selon la revendication 6, **caractérisé en ce que** le rayon de la première partie de liaison est 2-15 mm.

8. Tube pour fabriquer un rouleau selon l'une quelconque des revendications 1-7, **caractérisé en ce que**
la distance entre la partie de support (23) et le corps (21) est supérieure ou égale à 5 mm ;
et/ou
l'angle entre la partie de support (23) et un plan vertical est 90°-150°.

9. Tube pour fabriquer un rouleau selon l'une quelconque des revendications 1-8, **caractérisé en ce que** l'épaisseur de la partie de liaison (22) est 3 mm-20 mm.

10. Corps de rouleau, **caractérisé en ce qu'**il comprend un tube pour fabriquer un rouleau selon l'une quelconque des revendications 1-9.

11. Corps de rouleau selon la revendication 10, **caractérisé en ce que** les deux extrémités du premier arbre de support (3) ou du second arbre de support (4) s'étendent hors du tube pour fabriquer un rouleau ;
ou
les deux extrémités du tube pour fabriquer un rouleau sont dotées de têtes d'arbre (13) ; dans lequel une extrémité de la tête d'arbre (13) s'étend hors du tube pour fabriquer un rouleau et au moins trois brides d'arbre (14) sont disposées sur la tête d'arbre (13) ; dans lequel le bord externe des brides d'arbre (14) est relié à la paroi interne du corps de tube (1) ou à la paroi interne de l'arbre de support.

12. Corps de rouleau selon la revendication 11, **caractérisé en ce que** les brides d'arbre (14) sont des brides droites, des brides de bol ou des éléments de support de corps de tube (2).

13. Corps de rouleau selon la revendication 5 et la revendication 10, **caractérisé en ce que** le tube en acier inoxydable (12) est doté radialement d'une pluralité de plaques de séparation (54) et les plaques de séparation (54) sont reliées à demeure au tube en acier inoxydable (12) ou formées d'un seul tenant avec le tube en acier inoxydable (12).

14. Corps de rouleau selon la revendication 10, **caractérisé en ce que** la surface du corps de tube (1) est dotée d'un fil d'enroulement (6) présentant un sens de rotation vers la gauche et/ou vers la droite et la section transversale du fil d'enroulement (6) présente une forme en T avec une surface supérieure présentant une forme d'arc.

15. Corps de rouleau selon la revendication 10, **caractérisé en ce qu'**une douille externe (7) est emmanchée sur le côté externe du tube pour fabriquer un rouleau et la douille externe (7) est dotée axialement d'une pluralité de saillies (71) et le sommet des saillies (71) est en forme d'arc.

16. Machine à repasser, machine à étaler, dispositif d'avancement de tissu, machine à plier ou machine à empiler utilisant un corps de rouleau selon l'une quelconque des revendications 10-15.
